# EUROPEAN PATENT APPLICATION

(11) **EP 2 290 929 A2**
(43) Date of publication of application: **02.03.2011**
(21) Application number: 10008622.2
(22) Date of filing: 18.08.2010
(51) Int. Cl.: H04M 1/725, H04W 8/24

(54) **Handheld communication devices with shared processing and methods for use therewith**

(30) Priority: 25.08.2009 US 547432
(71) Applicant: Broadcom Corporation, Irvine, CA 92617 (US)
(72) Inventor: Rofougaran, Ahmadreza, 92657 Newport Coast (US)
(74) Representative: Jehle, Volker Armin

(57) **Abstract**

A handheld communication device includes a wireless telephony transceiver that communicates with a telecommunication network. A processing module executes a plurality of applications including a telecommunication application. An RF bus interface facilitates a wireless connection to a remote handheld communication device in proximity to the handheld communication device. The processing module executes an application while sharing at least one processing resource of the remote handheld communication device via the wireless connection. In the alternative, a chip-to-chip interface can facilitate the wireless connection between at least one integrated circuit of the handheld communication device and an integrated circuit of the remote handheld communication device.

## Description

### CROSS REFERENCE TO RELATED APPLICATIONS - NOT APPLICABLE

### STATEMENT REGARDING FEDERALLY SPONSORED RESEARCH OR DEVELOPMENT - NOT APPLICABLE

### INCORPORATION-BY-REFERENCE OF MATERIAL SUBMITTED ON A COMPACT DISC -NOT APPLICABLE

### BACKGROUND OF THE INVENTION

### TECHNICAL FIELD OF THE INVENTION

This invention relates generally to communication systems and more particularly to computing devices used in such communication systems.

### DESCRIPTION OF RELATED ART

Communication systems are known to support wireless and wire lined communications between wireless and/or wire lined communication devices. Such communication systems range from national and/or international cellular telephone systems to the Internet to point-to-point in-home wireless networks to radio frequency identification (RFID) systems. Each type of communication system is constructed, and hence operates, in accordance with one or more communication standards. For instance, wireless communication systems may operate in accordance with one or more standards including, but not limited to, IEEE 802.11, IEEE 802.15.4, Bluetooth, global system for mobile communications (GSM), wideband code division multiplexing (WCDMA), enhanced data rates for GSM evolution (EDGE), universal mobile telecommunications system (UMTS), long term evolution (LTE), IEEE 802.16, evolution data optimized (EV-DO), and/or variations thereof.

Depending on the type of wireless communication system, a wireless communication device, such as a cellular telephone, two-way radio, personal digital assistant (PDA), personal computer (PC), laptop computer, home entertainment equipment, RFID reader, RFID tag, et cetera communicates directly or indirectly with other wireless communication devices. For direct communications (also known as point-to-point communications), the participating wireless communication devices tune their receivers and transmitters to the same channel or channels (e.g., one of the plurality of radio frequency (RF) carriers of the wireless communication system) and communicate over that channel(s). For indirect wireless communications, each wireless communication device communicates directly with an associated base station (e.g., for cellular services) and/or an associated access point (e.g., for an in-home or in-building wireless network) via an assigned channel. To complete a communication connection between the wireless communication devices, the associated base stations and/or associated access points communicate with each other directly, via a system controller, via the public switch telephone network, via the Internet, and/or via some other wide area network.

The increase in the computing power of these devices has been accompanied by the increasingly complex applications that fully utilize these resources. It is desirable for a handheld device to have access to additional processing resources at times when computationally complex or memory intensive applications are executed.

### BRIEF SUMMARY OF THE INVENTION

The present invention is directed to apparatus and methods of operation that are further described in the following Brief Description of the Drawings, the Detailed Description of the Invention, and the claims.

According to an aspect, a handheld communication device comprises:
a wireless telephony transceiver that communicates with a telecommunication network;
a memory module;
a processing module, coupled to the memory module and the wireless transceiver, that executes a plurality of applications including a telecommunication application; and
an RF bus interface for facilitating a wireless connection to at least one remote handheld communication device in proximity to the handheld communication device;
wherein the processing module executes at least one of the plurality of applications while sharing at least one processing resource of the at least one remote handheld communication device via the wireless connection.

Advantageously, at least one remote handheld communication device includes a plurality of remote handheld communication devices.

Advantageously, the at least one processing resource includes a memory of the at least one remote handheld communication device.

Advantageously, the at least one processing resource includes a processor of the at least one remote handheld communication device.

Advantageously, the RF bus interface includes a millimeter wave transceiver for facilitating the wireless connection in a millimeter wave frequency band.

Advantageously, the handheld communication device further comprises:
a user interface, coupled to the RF bus interface, for receiving a sharing indication from a user;
wherein the RF bus interface is selectively enabled and disabled based on the sharing indication.

Advantageously, the processing module executes an application of the at least one remote handheld communication device while sharing the at least one processing resource of the at least one remote handheld communication device via the wireless connection.

Advantageously, the handheld communication device further comprises:
a user interface, coupled to the RF bus interface, for receiving a sharing limit from a user;
wherein the processing module limits an amount of computation resources expended by the processing module to execute the application of the at least one remote handheld communication device, based on the sharing limit.

Advantageously, the memory module shares a memory resource with the at least one remote handheld communication device via the wireless connection in conjunction with an application executed by the at least one remote handheld communication device.

Advantageously, the handheld communication device further comprises:
a user interface, coupled to the RF bus interface, for receiving a sharing limit from a user;
wherein the memory module limits an amount of the memory resource shared with the at least one remote handheld communication device, based on the sharing limit.

Advantageously, the handheld communication device operates in a master mode, and the at least one remote communication device operates in a slave mode.

Advantageously, the at least one remote communication device identifies the processing resources to the handheld communication device and wherein the handheld communication devices establishes a configuration for the memory module, the processing module, and the processing resources to execute the at least one of the plurality of applications.

According to an aspect, a handheld communication device comprises:
a wireless telephony transceiver that communicates with a telecommunication network;
at least one integrated circuit that includes at least one of:
   a memory chip;
   a processing chip, coupled to the memory chip, that executes a plurality of applications including a telecommunication application; and
a chip-to-chip interface for facilitating a wireless connection between the at least one integrated circuit and an integrated circuit of at least one remote handheld communication device in proximity to the handheld communication device;
wherein the processing module executes at least one of the plurality of applications while sharing at least one processing resource of the at least one remote handheld communication device via the wireless connection.

Advantageously, at least one remote handheld communication device includes a plurality of remote handheld communication devices.

Advantageously, the at least one processing resource includes a memory of the at least one remote handheld communication device.

Advantageously, the at least one processing resource includes a processor of the at least one remote handheld communication device.

Advantageously, the chip-to-chip interface includes a millimeter wave transceiver for facilitating the wireless connection in a millimeter wave frequency band.

Advantageously, the handheld communication device further comprises:
a user interface, coupled to the chip-to-chip interface, for receiving a sharing indication from a user;
wherein the chip-to-chip interface is selectively enabled and disabled based on the sharing indication.

Advantageously, the processing chip executes an application of the at least one remote handheld communication device while sharing the at least one processing resource of the at least one remote handheld communication device via the wireless connection.

Advantageously, the handheld communication device further comprises:
a user interface, coupled to the chip-to-chip interface, for receiving a sharing limit from a user;
wherein the processing module limits an amount of computation resources expended by the processing module to execute the application of the at least one remote handheld communication device, based on the sharing limit.

Advantageously, the memory chip shares a memory resource with the at least one remote handheld communication device via the wireless connection in conjunction with an application executed by the at least one remote handheld communication device.

Advantageously, the handheld communication device further comprises:
a user interface, coupled to the chip-to-chip interface, for receiving a sharing limit from a user;
wherein the memory module limits an amount of the memory resource shared with the at least one remote handheld communication device, based on the sharing limit.

Advantageously, the handheld communication device operates in a master mode, and the at least one remote communication device operates in a slave mode.

Advantageously, the at least one remote communication device identifies the processing resources to the handheld communication device and wherein the handheld communication devices establishes a configuration for the memory module, the processing module, and the processing resources to execute the at least one of the plurality of applications.

According to an aspect, a method for use with a handheld communication device comprises:
facilitating a wireless connection to at least one remote handheld communication device in proximity to the handheld communication device;
executing at least one of a plurality of applications via a processor of the handheld communication device while sharing at least one processing resource of the at least one remote handheld communication device via the wireless connection.

According to a further aspect, a method for use with a handheld communication device comprises:
facilitating a wireless connection between at least one integrated circuit of the handheld communication device and an integrated circuit of at least one remote handheld communication device in proximity to the handheld communication device;
executes at least one of the plurality of applications via a processing chip of the handheld communication device while sharing at least one processing resource of the at least one remote handheld communication device via the wireless connection;
wherein the at least one integrated circuit includes at least one of: a memory chip; and a processing chip of the at least one remote handheld communication device.

Other features and advantages of the present invention will become apparent from the following detailed description of the invention made with reference to the accompanying drawings.

### BRIEF DESCRIPTION OF THE SEVERAL VIEWS OF THE DRAWING(S)

Figure 1 is a schematic block diagram of an embodiment of a communication system that includes a plurality of handheld communication devices in accordance with the present invention;
Figure 2 is a schematic block diagram of an embodiment of a communication system that includes a plurality of handheld communication devices;
Figure 3 is a schematic block diagram of an embodiment of a handheld unit that is coupled to other handheld units in accordance with the present invention;
Figure 4 is a schematic block diagram of an embodiment of RF bus interfaces in accordance with the present invention;
Figure 5 is a schematic block diagram of another embodiment of RF bus interfaces in accordance with the present invention;
Figure 6 is a schematic block diagram of another embodiment of RF bus interfaces in accordance with the present invention;
Figure 7 is a schematic block diagram of an embodiment of an RF transceiver device in accordance with the present invention.
Figure 8 is a diagram of an embodiment of a frame of an RF bus wireless communication in accordance with the present invention;
Figure 9 is a diagram of an example of a frame of an RF transceiver device wireless communication that shares a frequency band and minimizes interference between the different signals;
Figure 10 is a schematic block diagram of an embodiment of an RF bus controller 88 that includes an interface 730 and a processing module 732;
Figure 11 is a logic diagram of method for controlling access to an RF bus that is performed by the RF bus controller 88;
Figure 12 is a diagram of another embodiment of a frame 750 of an RF bus communication that includes a request control slot 752, an allocation control slot 754, and a data slot(s) 756;
Figure 13 is a logic diagram of method for determining RF bus resource availability of step 736 of Figure 11;
Figure 14 is a logic diagram of another method for controlling access to an RF bus that is performed by the RF bus controller 88;
Figure 15 is a logic diagram of another method for controlling access to an RF bus;
Figure 16 is a schematic block diagram of an embodiment of an RF bus transceiver 840 that may be used as or in combination with RF bus transceiver 108 or 110;
Figure 17 is a logic diagram of method for RF bus transmitting that begins at step 846 where the transmitter 842 determine whether outbound information is to be transmitted via the RF bus.
Figure 18 is a logic diagram of method for RF bus receiving that begins at step 856 where the receiver 844 determines whether inbound information is to be received via the RF bus;
Figure 19 is a schematic block diagram of another embodiment of a handheld unit that is coupled to other handheld units in accordance with the present invention.
Figure 20 is a schematic block diagram of an embodiment of a chip-to-chip interface in accordance with the present invention;
Figure 21 is a schematic block diagram of an embodiment of a chip-to-chip transceiver device in accordance with the present invention;
Figure 22 is a flowchart representation of an embodiment of a method in accordance with the present invention; and
Figure 23 is a flowchart representation of an embodiment of a method in accordance with the present invention.

### DETAILED DESCRIPTION OF THE INVENTION

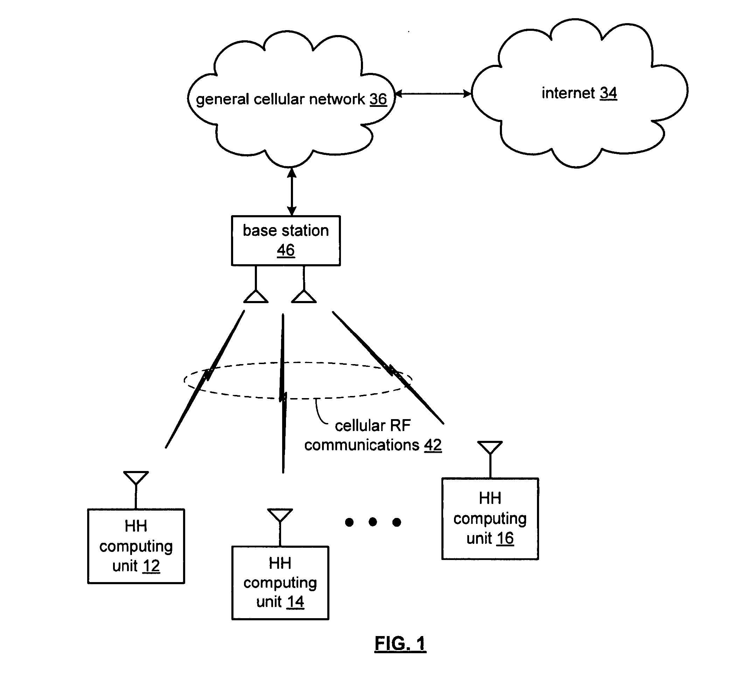

Figure 1 is a schematic block diagram of an embodiment of a communication system that includes a plurality of handheld communication devices in accordance with the present invention. The handheld computing unit 12, can be implemented as a handheld communication device and may have a form factor similar to a cellular telephone, personal digital assistant, personal digital audio/video player, etc. and includes a wireless connection to other handheld computing units, such as handheld computing units 14 and 16. The wireless connection between devices can be implemented via wireless transceivers (e.g., Bluetooth, ZigBee, millimeter wave, etc.), and/or magnetic coils.

In general, the handheld computing unit 12 includes a processing module (e.g., central processing unit), a memory, for executing a plurality of applications. In this manner, the handheld computing unit 12 functions independently as a personal computer (PC) or laptop computer, a cellular telephone, a GPS receiver, a personal digital audio player, a personal digital video player, a personal digital assistant, and/or other handheld electronic device.

In the embodiment shown, each of the handheld computing units 12, 14 and 16 are capable of executing a wireless telephony application to communicate with a telecommunication network, such as generate cellular network 36 (e.g., public switched telephone network, mobile core network for GSM, WCDMA, EDGE, UMTS, LTE, etc.) coupled to a data backbone network such as internet 34. If the HH computing unit 12 desires to participate in a cellular communication, it registers and communicates with a base station 46. Similarly, handheld computing units 14 and 16 can register and communicate with base station 46 to participate in cellular communications.

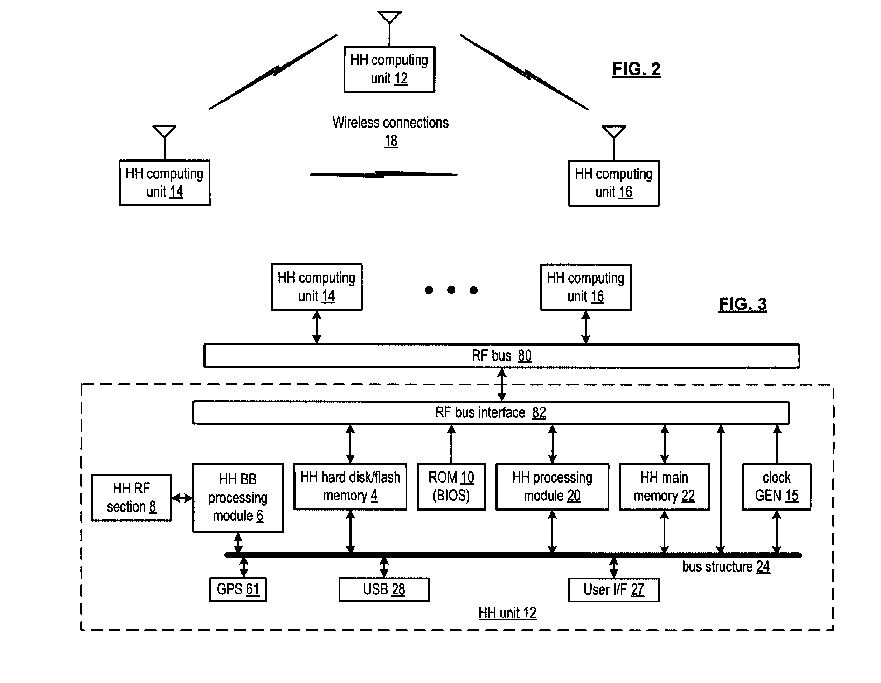

Figure 2 is a schematic block diagram of an embodiment of a communication system that includes a plurality of handheld communication devices. As discussed in conjunction with FIG. 1, the handheld computing unit 12 can be coupled to other devices, such as one or more of the handheld computing units 14 and 16, via wireless connections 18. When coupled, the processing resources, such as processors and memory of these devices can be shared to operate an application of one of the devices.

In addition, when the handheld computing unit 12 is coupled to other handheld devices, such as one or more of the handheld computing units 14 and 16, files and/or applications can be swapped therebetween. For example, assume that the user of the handheld computing unit 12 has created a presentation using presentation software and both reside in memory of the handheld computing unit 14. The user may elect to transfer the presentation file and the presentation software to memory of the handheld computing unit 12. If the handheld computing unit 12 has sufficient memory to store the presentation file and application, then it is copied from the handheld computing unit 14 memory to the handheld computing unit memory 12. If there is not sufficient memory in the handheld computing unit 12, the user may transfer an application and/or file from the handheld computing unit memory 12 to the handheld computing unit memory 14 to make room for the presentation file and application.

Figure 3 is a schematic block diagram of an embodiment of a handheld unit that is coupled to other handheld units in accordance with the present invention. The handheld computing unit 12 includes a handheld RF section 8 and baseband processing module 6 that operate as a transceiver, such as a wireless telephony transceiver for communicating with one or more wireless networks such as a general cellular network 36. Universal serial bus (USB) interface 28 or a similar wireless connection provides the ability of the handheld computing unit 12 to communicate with a computer, peripheral device such as a mouse keyboard, printer, game controller or other peripheral device and optionally with other handheld computing units 14 and 16.

Global positioning system (GPS) receiver 61 communicates with the GPS network to provide provides GPS data. Handheld computing unit 12 includes a plurality of processing resources that include a plurality of memory modules including handheld hard disk/flash memory 4, read only memory (ROM) BIOS 10, and handheld main memory 22, in addition to handheld processing module 20. A clock generator 15 generates a clock signal that can be used internally by modules of handheld computing unit 12 and can be shared externally with other devices via RF bus interface 82 and RF bus 80. The handheld computing units 14 and 16 can be implemented in a similar fashion to handheld computing unit 12. User interface 27 includes a keyboard, keypad, pointing device, touch screen, video display, speakers, microphone and/or other user interface devices along with appropriate drivers and other interfaces for providing information to a user and for receiving user commands and selections.

The RF bus interface 82, via RF bus 80 provides a wireless connection between the handheld computing unit 12 and other devices such as handheld computing units 14 and 16 that are in proximity to the handheld computing unit 12. The RF bus interface can include one or more wireless interfaces, and/or one or more magnetic coupling interfaces. A wireless interface may be supported by radio frequency (RF) and/or millimeter wave (MMW) transceivers that support one or more types of wireless communication protocols (e.g., Bluetooth, ZigBee, 802.11, millimeter wave frequency band, V-band, 60 GHz, etc.). A magnetic coupling interface may be supported by transceivers with magnetic coils.

The bus structures 124 may be a wired and/or wireless bus. A wired bus may include 8 or more lines for data, for instructions, for control. RF bus 80 and/or a wireless implementation of bus structure 24 may be implemented as an RF bus as described in copending patent application RF BUS CONTROLLER, having a filing date of 1/31/07, and a serial number of 11/700,285.

With handheld computing unit 12 coupled to handheld computing units 14 and 16, these devices can share processing resources, such as computations resources of a processor or memory resources of a memory module, to execute an application as a single computing device. In particular, handheld processing module 20 can execute one or more applications while sharing processing resources with remote handheld communication devices via the wireless connection. In a reciprocal fashion, With handheld computing unit 12 coupled to handheld computing units 14 and 16, either one of the remote handheld communication devices can execute one or more applications while sharing processing resources with handheld computing device 12 via the wireless connection. In an embodiment, the handheld main memory 22 includes a memory controller to coordinate the reading of data from and writing of data to the handheld main memory 22 and the memory of other devices.

In an embodiment of the present invention, the user interface 27 receives a sharing indication from a user that indicates whether or not the user wishes to share processing resources with other handheld devices in proximity to the handheld computing unit 12. In this embodiment, the RF bus interface 82 is selectively enabled and disabled based on the sharing indication. In this fashion, the user can choose to disable RF bus interface and operate the handheld computing unit 12 independently, even in the presence of other devices in proximity to the handheld computing unit 12. Further, the user can selectively enable the RF bus interface and operate the handheld computing unit 12 in a shared mode in the presence of other devices in proximity to the handheld computing unit 12.

In an embodiment of the present invention, the user interface 27 receives a sharing limit from a user that indicates a limit to the amount of processing resources to be shared with other handheld devices in proximity to the handheld computing unit 12. In this fashion, the user can allocate only limited processing resources, such as an amount of memory, a percentage of available memory a percentage of computational power, etc, that is available to be shared with other devices. In this fashion, the memory modules limits memory resources and the handheld processing module 20 limits the amount of computation resources expended to execute an application of a remote handheld communication device, based on the sharing limit. In addition, the user, via the user interface can indicate certain memory modules or certain memory files that will not be shared with remote devices.

In order to coordinate activities in the shared mode of operation, one of the handheld computing units 12, 14 or 16 can operate as a master with the other units operating as slaves. In particular, the devices operating as slaves can identify their processing resources available for sharing to the handheld device operating as the master. In response, the master can establish a configuration the processing resources (e.g. memory and processing modules) for itself and each of the slave devices to execute the shared applications.

Handheld processing module 20 can be implemented using one or more microprocessors, micro-controllers, digital signal processors, microcomputers, central processing units, field programmable gate arrays, programmable logic devices, state machines, logic circuits, analog circuits, digital circuits, and/or any devices that manipulates signals (analog and/or digital) based on operational instructions that are stored in any of the memory modules of handheld computing unit 12 and of handheld computing units 14 and 16 when coupled thereto. When handheld processing module 20 shares processing resources with other devices that include one or more other processing devices, each device can perform the same steps, processes or functions in order to provide fault tolerance or redundancy. Alternatively, the function, steps and processes performed by handheld processing module 20 can be split between different devices to provide greater computational speed and/or efficiency in conjunction with a pipeline process, parallel processing or other contemporaneous processing.

Handheld main memory 22 may be a single memory device or a plurality of memory devices. Such a memory device may be a read-only memory, random access memory, volatile memory, non-volatile memory, static random access memory (SRAM), dynamic random access memory (DRAM), flash memory, cache memory, and/or any device that stores digital information. Note that when the handheld processing module 20 implements one or more of its functions via a state machine, analog circuitry, digital circuitry, and/or logic circuitry, the handheld main memory 22 storing the corresponding operational instructions may be embedded within, or external to, the circuitry comprising the state machine, analog circuitry, digital circuitry, and/or logic circuitry. While a particular bus architecture is shown, other architectures including direct connectivity between modules and/or additional buses can likewise be employed.

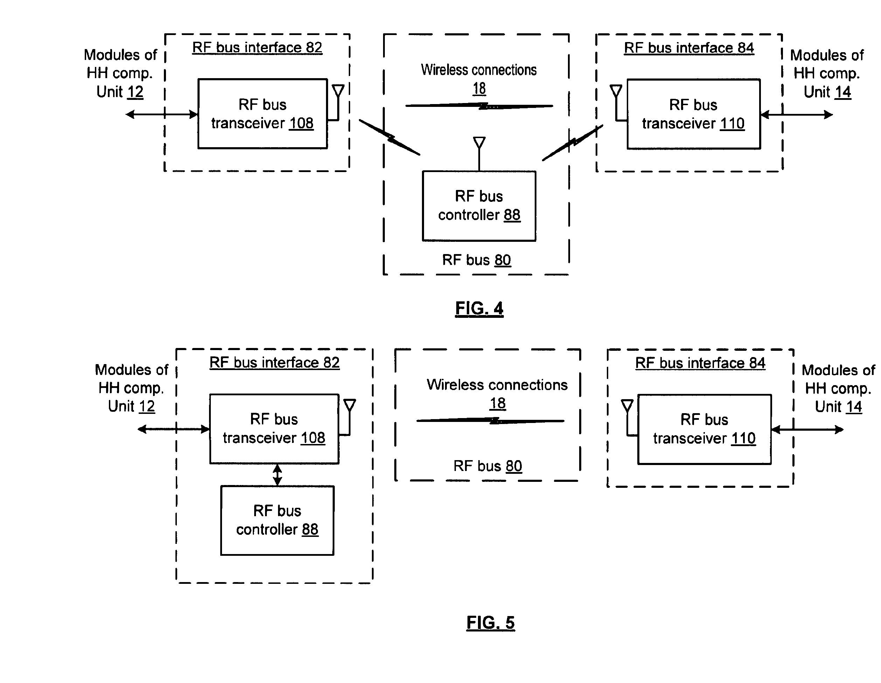

Figure 4 is a schematic block diagram of an embodiment of RF bus interfaces in accordance with the present invention. In particular, an RF bus 80 is shown that includes an RF bus controller 88 that facilitates the wireless connections 18 between RF bus transceivers 108 and 110 of RF bus interfaces 82 and 84 of handheld computing units 12 and 14. In this embodiment, RF bus interface 82 includes a first radio frequency (RF) bus transceiver 108 and RF bus interface 84 includes a second RF bus transceiver 110 to support wireless connection 18 therebetween. The wireless connections 18 may be RF data communications, RF instruction communications, RF control signal communications, and/or RF input/output communications. For example, data, control, operational instructions, and/or input/output signals (e.g., analog input signals, analog output signals, digital input signals, digital output signals) that are traditionally conveyed between modules of a single device are, transmitted via the wireless connections 18.

The wireless connections 18 may also include operating system level communications and application level communications. The operating system level communications are communications that correspond to resource management of the handheld computing units 12, 14 and 16, loading and executing applications (e.g., a program or algorithm), multitasking of applications, protection between applications, device start-up, interfacing with a users, etc. The application level communications are communications that correspond to the data conveyed, operational instructions conveyed, and/or control signals conveyed during execution of an application.

The RF bus controller 88 is coupled to control the wireless connections 18 between the first and second RF bus transceivers 108, 110. The RF bus controller 88 may be a separate device or it may be included in one of the RF bus interfaces 82 or 84 to control, coordinate or otherwise facilitate the wireless connections 18, particularly when three or more devices are coupled together in this fashion. In an embodiment of the present invention, the RF bus controller 88 receives RF bus requests from the handheld computing units 12, 14 and/or 16 and issues RF bus grants in response thereto to share the RF bus via time slots, frequency channels, or to otherwise allocate bus access in accordance with other multiple access methodologies. While RF bus controller 88 is shown, other configurations are possible without the use of a separate RF bus controller.

Figure 5 is a schematic block diagram of another embodiment of RF bus interfaces in accordance with the present invention. In particular, similar elements described in conjunction with FIG. 4 are presented and are referred to by common reference numerals. In this embodiment, however, the RF bus controller is implemented as part of the RF bus transceiver 82 of handheld computing unit 12. In this fashion, RF bus controller 88, via RF bus transceiver 108 control, coordinate or otherwise facilitate the wireless connections 18, particularly when three or more devices are coupled together in this fashion.

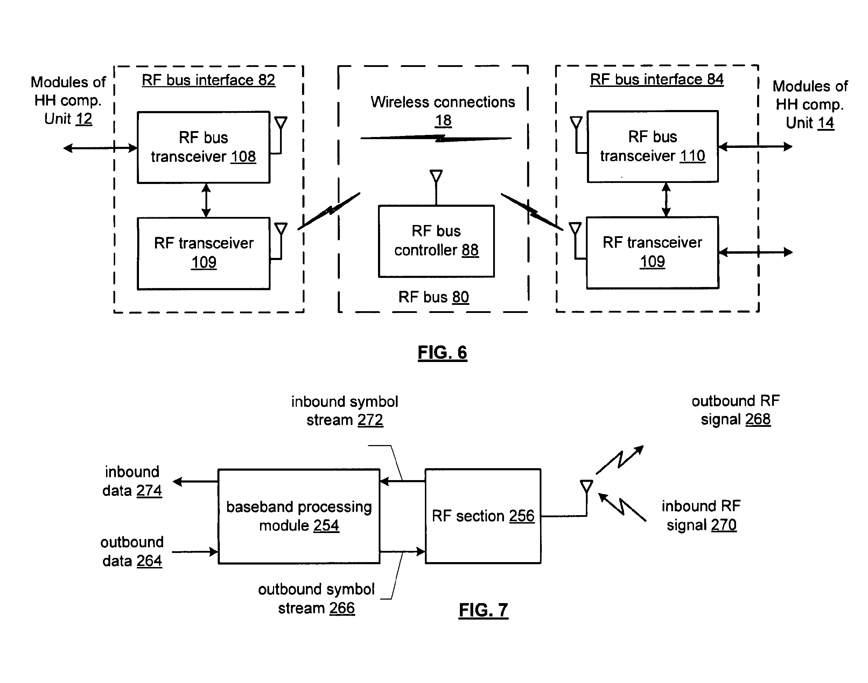

Figure 6 is a schematic block diagram of another embodiment of RF bus interfaces in accordance with the present invention. In particular, similar elements described in conjunction with FIG. 4 are presented and are referred to by common reference numerals. In this embodiment, however, the RF bus interfaces 82 and 84 each include a separate RF transceiver 109. In this embodiment, the wireless connections 18 occur in a different frequency spectrum than bus control communications with RF bus controller 88. As such, they can occur simultaneously with minimal interference. For example, the RF bus requests and RF bus grants may be communicated using a CSMA with collision avoidance technique, a poll-response technique, allocated time slots of a TDMA frame, allocated frequency slots of an FDMA frame, and/or allocated code slots of a CDMA frame in one frequency spectrum or using one carrier frequency and the wireless connections may use a CSMA with collision avoidance technique, a poll-response technique, allocated time slots of a TDMA frame, allocated frequency slots of an FDMA frame, and/or allocated code slots of a CDMA frame in another frequency spectrum or using another carrier frequency.

Figure 7 is a schematic block diagram of an embodiment of an RF transceiver device in accordance with the present invention. In particular an RF transceiver is shown that can be used to implement RF bus transceivers 108 and 110 and/or RF transceivers 109.

The baseband processing module 254 is coupled to convert outbound data 264 into an outbound symbol stream 266. This may be done in accordance with one or more wireless communication protocols including, but not limited to, IEEE 802.11, Bluetooth, GSM, RFID, CDMA, Enhanced Data rates for GSM Evolution (EDGE), General Packet Radio Service (GPRS), new and/or current versions thereof, modifications thereof, extensions thereof, combinations thereof, new WLAN standards, new cellular voice and/or data standards, and/or new wireless personal area networks (WPAN) and/or other communication protocol.

The RF section 256 converts the outbound symbol stream 266 into an outbound RF signal 268. In an embodiment, the RF section 256 includes a digital to analog conversion module, an up-conversion module, and a power amplifier module. The digital to analog conversion module converts the outbound symbol stream 266 into an analog symbol stream. The up-conversion module, which may be a direct conversion module or a superheterodyne module, mixes the analog symbol stream with a local oscillation to produce an up-converted signal. The power amplifier module amplifies the up-converted signal to produce the outbound RF signal 268. In another embodiment, the up-conversion module modulates phase of the local oscillation based on phase information of the analog symbol stream to produce the up-converted signal. The power amplifier module amplifies the up-converted signal based on a constant amplifier factor or based on amplitude modulation information of the analog symbol stream to produce the outbound RF signal 268.

The RF section 256 is also coupled to and to convert an inbound RF signal 270 into an inbound symbol stream 272. In one embodiment, the RF section 256 includes a low noise amplifier module, a down-conversion module, and an analog to digital conversion module. The low noise amplifier module amplifies the inbound RF signal 270 to produce an amplified inbound RF signal. The down conversion module, which may a direction conversion module or a superheterodyne module, mixes the amplified inbound RF signal with a local oscillation to produce an analog inbound symbol stream. The analog to digital conversion module converts the analog inbound symbol stream into the inbound symbol stream 272.

The baseband processing module 254 is also coupled to convert the inbound symbol stream 272 into inbound data 274. This may be done in accordance with one or more wireless communication protocols including, but not limited to, IEEE 802.11, Bluetooth, GSM, RFID, CDMA, Enhanced Data rates for GSM Evolution (EDGE), General Packet Radio Service (GPRS), new and/or current versions thereof, modifications thereof, extensions thereof, combinations thereof, new WLAN standards, new cellular voice and/or data standards, and/or new wireless personal area networks (WPAN) and/or other communication protocol.

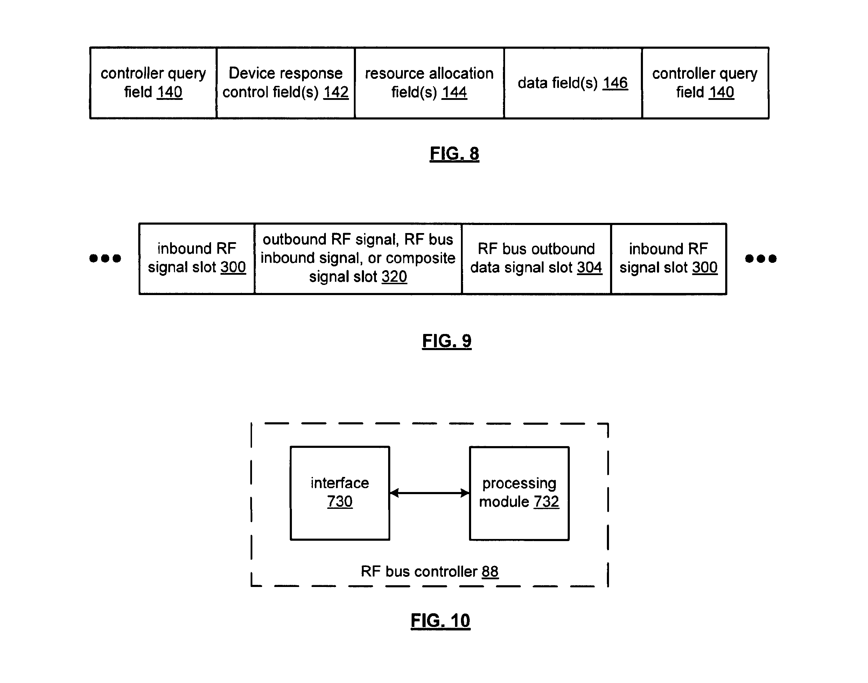

Figure 8 is a diagram of an embodiment of a frame of an RF bus wireless communication in accordance with the present invention. The frame, or packet, includes a controller inquiry field 140, a device response control field or fields 142, a resource allocation field or fields 144, and a data field or fields 146. The RF bus controller, such as RF bus controller 88 uses the controller inquiry field 140 to determine whether one or more devices, such as handheld computing units 12, 14 and/or 16, have an up-coming need to access the RF bus 80. In one embodiment, the RF bus controller 88 addresses a single device per frame as to whether the device has an up-coming need for the RF bus 80. In another embodiment, the RF bus controller 88 addresses two or more devices as to whether they have an up-coming need for the RF bus 80. The RF bus controller 88 may be use a polling mechanism to address the devices, which indicates how and when to response to the polling inquiry.

The RF bus interfaces 82, 84 respond to the RF bus controller's query in the device response control field or fields 142. In one embodiment, the devices share a single device response control field using a carrier sense multiple access (CSMA) with collision avoidance technique, using pre-assigned sub-slots, using a round robin technique, using a poll-respond technique, etc. In another embodiment, the devices have their own device response control field 142. In either embodiment, each device response includes an indication of whether it has data to convey via the RF bus 80, how much data to convey, the nature of the data (e.g., application data, application instructions, operating system level data and/or instructions, etc.), the target or targets of the data, a priority level of the requestor, a priority level of the data, data integrity requirements, and/or any other information relating to the conveyance of the data via the RF bus 80.

The RF bus controller 88 uses the resource allocation field or fields 144 to grant access to the RF bus 80 to one or more devices, such as handheld computing device 12, 14 and/or 16. In one embodiment, the RF bus controller 88 uses a single field to respond to one or more devices. In another embodiment, the RF bus controller 88 responds to the devices in separate resource allocation fields 144. In either embodiment, the RF bus grant 144 indicates when, how, and for how long the device has access to the RF bus during the one or more data fields 146.

Figure 9 is a diagram of an example of a frame of an RF transceiver device wireless communication that shares a frequency band and minimizes interference between the different signals 268, 270, 276, and 278. In this example, the frame includes an inbound RF signal slot 300, an RF bus inbound data signal slot 302, an RF bus outbound data signal 304, and an outbound RF signal 306. The slots 300-306 may be TDMA slots, CDMA slots, or FDMA slots, which may be reallocated on a frame by frame basis by the RF bus controller 88. For example, the baseband processing module 254 may request one or more slots from the RF bus controller 88 for the inbound RF signal 270, the outbound RF signal 268, the RF bus inbound data signal 276, and/or the RF bus outbound data signal 278. Note that the frame may include an additional slot for bus access communications if the RF bus requests and RF bus grants are communicated wirelessly within the same frequency band as the signals 268, 270, 276, and 278.

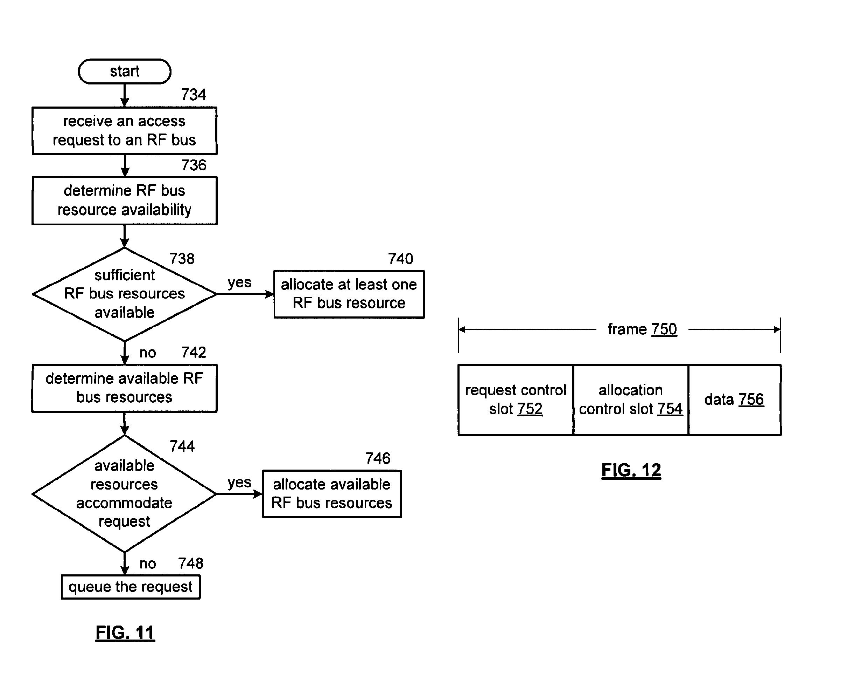

Figure 10 is a schematic block diagram of an embodiment of an RF bus controller 88 that includes an interface 730 and a processing module 732. The processing module 732 may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module 732 may have an associated memory and/or memory element, which may be a single memory device, a plurality of memory devices, and/or embedded circuitry of the processing module. Such a memory device may be a read-only memory, random access memory, volatile memory, non-volatile memory, static memory, dynamic memory, flash memory, cache memory, and/or any device that stores digital information. Note that when the processing module 732 implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Further note that, the memory element stores, and the processing module 732 executes, hard coded and/or operational instructions corresponding to at least some of the steps and/or functions illustrated in Figures 11-16.

The interface 730 may be a wireline interface (e.g., an Ethernet connection, a USB connection, an I2C connection, an I2S connection, or any other type of serial interface) or a wireless interface (e.g., WLAN, WPAN, communication, etc.) If the interface 730 is a wireless interface, it may include a transceiver module to access a control RF communication path having a different frequency than a frequency of the RF bus, a transceiver module to access a control time slot of a time division multiple access partitioning of the RF bus 80, a transceiver module to access a control frequency slot of a frequency division multiple access partitioning of the RF bus, or a transceiver module to access the RF bus for communicating the RF bus access requests and allocations via a carrier sense multiple access (CSMA) protocol. Regardless of the type of interface, the interface 732 is coupled for communicating RF bus access requests and allocations.

Figure 11 is a logic diagram of method for controlling access to an RF bus that is performed by the RF bus controller 88. The method begins at step 734 where the RF Bus controller 88 receives an access request to an RF bus via the interface 730. The access request may be received in a variety of ways. For example, the access request may be received in response to a polling request, in an allocated time division multiple access (TDMA) slot, in response to a token ring passing scheme, in accordance with a carrier sense multiple access (CSMA) protocol of a RF bus control resource, in accordance with an interrupt protocol, in an allocated frequency division multiple access (FDMA) slot, and/or in an allocated code division multiple access (CDMA) slot.

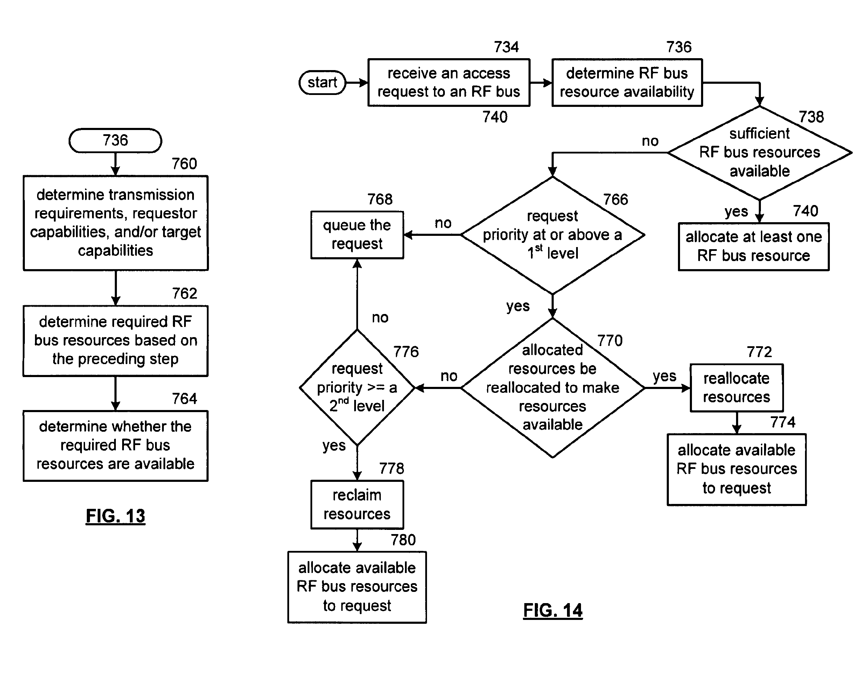

The method continues at step 736 where the RF bus controller 88 determines RF bus resource availability. This step may also include determining an RF bus protocol based on the access request. The RF bus protocol may be a standardized wireless protocol (e.g., GSM, EDGE, GPRS, IEEE 802.11, Bluetooth, etc), a proprietary wireless protocol, and/or a modified standardized wireless protocol (based on one of the standard protocols but modified, for instance, using an IEEE 802.11 protocol but skipping the interleaving). The determining of the RF bus resource availability will be described in greater detail with reference to Figure 13.

The method branches at step 738 based on whether sufficient RF bus resources are availability. When sufficient RF bus resources are available, the process proceeds to step 740 where the RF bus controller allocates, via the interface, at least one RF bus resource in response to the access request. Note that the RF bus resources include, but are not limited to, a Single Input Single Output (SISO) channel, a Multiple Input Multiple Output (MIMO) channel, multiple SISO channels, multiple MIMO channels, null-reinforce multipath patterning (e.g., use multipath reinforced areas for RF bus communications between two ICs and multipath nulls to block RF bus communications between two ICs), frequency band selection, a TDMA slot, a CDMA slot, an FDMA slot, an unused free-space RF communication path or channel, an unused waveguide RF communication path or channel, an unused dielectric RF communication path or channel, and/or any other medium or portioning scheme for transmitting RF signals.

When sufficient RF bus resources are not available, the method proceeds to step 742 where the RF bus controller 88 determining what RF bus resources are available. The method then proceeds to step 744 where the RF bus controller determines whether the access request can be adequately accommodated by the available RF bus resources. In other words, optimal servicing of the original resource request would require a certain level of RF bus resource allocation based on the amount of data to be transmitted, the type of data being transmitted, the requestor of the RF bus access, the target(s) of the data, etc. In this instance, the optimal amount of RF bus resources is not available, but there are some resources available and the RF bus controller is determining whether this less than optimal amount of RF bus resources can adequately accommodate (e.g., less than optimal, but acceptable) the request. For example, assume that for a particular RF bus access request, the optimal amount of RF bus resources supports a data transfer rate of 100 Mega-bits per second, but that the available RF bus resources can only accommodate 66 Mega-bits per second. In this example, the RF bus controller 88 will determine whether the 66 Mbps rate will accommodate the request (i.e., won't suffer loss of data integrity, loss of data continuity, etc.).

When the access request can be accommodated by the available RF bus resources, the method proceeds to step 746 where the RF bus controller 88 allocates the available RF bus resources to for the access request. If, however, the access request cannot be accommodated by the available RF bus resources, the method proceeds to step 748 where the RF bus controller queues the access request.

Figure 12 is a diagram of another embodiment of a frame 750 of an RF bus communication that includes a request control slot 752, an allocation control slot 754, and a data slot(s) 756. In this embodiment, the slots 752-756 may be TDMA slots, FDMA slots, or CDMA slots on a single channel or multiple channels. Access to the request control slot 752 be allocated to the requesting devices by the RF bus controller 88 in a round robin manner, in a poll-request manner, in a CSMA with collision avoidance manner, etc.

In this embodiment, when a device has data to transmit via an RF bus (e.g., intra-IC RF bus and/or inter-IC RF bus), the requesting device provides its request within the request control slot 752. The requesting device waits until it detects an RF bus grant from the RF bus controller via the allocation control slot 754. The RF bus grant will indicate the RF bus resources being allocated, the duration of the allocation, etc. and may further include an indication of the RF bus protocol to be used. Once the requesting device has been granted access, it transmits its data via the allocated RF bus resources during the appropriate data slots 756.

Figure 13 is a logic diagram of method for determining RF bus resource availability of step 736 of Figure 11. This method begins at step 760 where the RF bus controller determines transmission requirements of the access request, RF bus capabilities of requestor, and/or RF bus capabilities of target. The transmission requirements include one or more of amount of information to be conveyed, priority level of requestor (e.g., application level priority, operating system level priority, continuous data priority, discontinuous data priority, etc.), priority level of the information to be conveyed (e.g., application data, interrupt data, operating system data, etc.), real-time or non-real-time aspect of the information to be conveyed, and/or information conveyance integrity requirements.

The conveyance integrity requirements relate to the sensitivity of the data, the requestor, and/or the target is to data transmission errors and the ability to correct them. Thus, if any of the target or requestor is intolerant to data transmission errors and/or they cannot be corrected, the data needs to be transmitted with the highest level of integrity to insure that very few data transmission errors will occur. Conversely, if the requestor and target can tolerate data transmission errors and/or can correct them; lower levels of integrity can be used to provide an adequate RF bus communication. Thus, the RF bus controller may consider the RF communication paths available (e.g., waveguide, dielectric, free-space), the level of rate encoding, the level of interleaving, the level of error correction, and/or the level of acknowledgement. For example, a request that can tolerate data transmission errors, the data may be bi-phase encoded with no interleaving and rate encoding and transmitted over a free-space RF communication path, where a request that cannot tolerate data transmission errors, the data will be encoded using the rate encoding, it will be interleaved, error correction (e.g., forward error correct) enabled, and transmitted over a waveguide RF communication path.

The method then proceeds to step 762 where the RF bus controller determines required RF bus resources based on the at least one of the transmission requirements, the RF bus capabilities of the requestor, and the RF bus capabilities of the target. The method then proceeds to step 764 where the RF bus controller determines whether the required RF bus resources are available for allocation.

Figure 14 is a logic diagram of another method for controlling access to an RF bus that is performed by the RF bus controller 88. The method begins at step 734 where the RF Bus controller 88 receives an access request to an RF bus via the interface 730. The access request may be received in a variety of ways. For example, the access request may be received in response to a polling request, in an allocated time division multiple access (TDMA) slot, in response to a token ring passing scheme, in accordance with a carrier sense multiple access (CSMA) protocol of a RF bus control resource, in accordance with an interrupt protocol, in an allocated frequency division multiple access (FDMA) slot, and/or in an allocated code division multiple access (CDMA) slot.

The method continues at step 736 where the RF bus controller 88 determines RF bus resource availability. This step may also include determining an RF bus protocol based on the access request. The RF bus protocol may be a standardized wireless protocol (e.g., GSM, EDGE, GPRS, IEEE 802.11, Bluetooth, etc), a proprietary wireless protocol, and/or a modified standardized wireless protocol (based on one of the standard protocols but modified, for instance, using an IEEE 802.11 protocol but skipping the interleaving). The determining of the RF bus resource availability was described with reference to Figure 13.

The method branches at step 738 based on whether sufficient RF bus resources are availability. When sufficient RF bus resources are available, the process proceeds to step 740 where the RF bus controller allocates, via the interface, at least one RF bus resource in response to the access request. Note that the RF bus resources include, but are not limited to, a Single Input Single Output (SISO) channel, a Multiple Input Multiple Output (MIMO) channel, multiple SISO channels, multiple MIMO channels, null-reinforce multipath patterning (e.g., use multipath reinforced areas for RF bus communications between two ICs and multipath nulls to block RF bus communications between two ICs), frequency band selection, a TDMA slot, a CDMA slot, an FDMA slot, an unused free-space RF communication path or channel, an unused waveguide RF communication path or channel, an unused dielectric RF communication path or channel, and/or any other medium or portioning scheme for transmitting RF signals.

When sufficient RF bus resources are not available, the method proceeds to step 766 where the RF bus controller 88 determines whether priority of requestor is at or above a first priority level. The priority level may be user defined, system defined, an ordering based on data type (e.g., operating system level data, application level data, interrupt data, real-time or continuous data v. non-real-time or discontinuous data, etc.), system level based (e.g., processing module, memory, peripheral device, etc. in order) and/or any other priority and/or ordering scheme. When the request is not above the 1^{st} level, the method proceeds to step 768 where the RF bus controller queues the request.

When priority of the requestor is at or above the first priority level, the method proceeds to step 77 where the RF bus controller 88 determines whether allocated RF bus resources can be reallocated to make available the sufficient RF bus resources. In this determination, the RF bus controller is determining whether existing RF bus communications can have their RF bus resources reallocated such that their level of service is below optimal, but still acceptable, to make sufficient resources available for the 1^{st} level or higher priority RF bus request.

When the RF bus resources can be reallocated, the method proceeds to step 772 where the RF bus controller reallocates at least some of the allocated RF bus resources to make resources available for the 1^{st} level or higher priority RF bus request. The method then proceeds to step 774 where the RF bus controller 88 allocates the sufficient RF bus resources to the 1^{st} level or higher priority request.

When the allocated RF bus resources cannot be reallocated and still provide an acceptable level of performance, the RF bus controller 88 determines whether the priority of the requestor is of a second priority level (i.e., of the highest level that if its request is not timely satisfied, the entire system or device may lock up). If the priority is not at the 2^{nd} level, the method proceeds to step 768 where the RF bus controller 88 queues the request.

If, however, the priority level of the requestor is of the second priority level, the method proceeds to step 778 where the RF bus controller reclaims RF bus resources from the allocated RF bus resources to provide the sufficient RF bus resources. In other words, the RF bus controller cancels a current RF bus communication to reclaim them for the 2^{nd} priority level request. In one embodiment, the current RF bus communication having the most tolerance to a data transmission interruption is selected for reclaiming the RF bus resources. The method then proceeds to step 780 where the RF bus controller 88 allocates the reclaimed RF bus resources to the 2^{nd} priority level requestor.

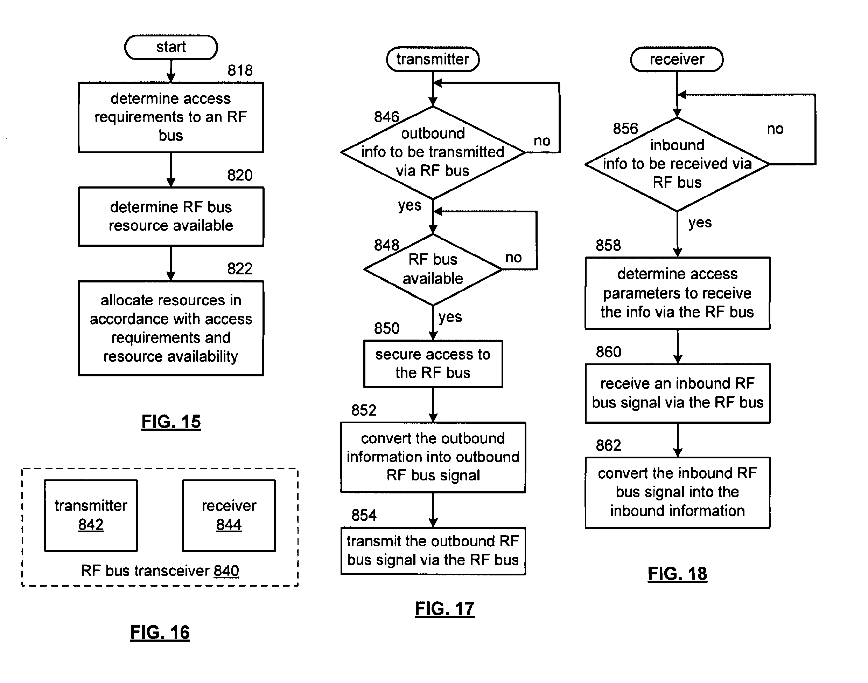

Figure 15 is a logic diagram of another method for controlling access to an RF bus. The method begins at step 818 where the RF bus controller determines access requirements to an RF bus. The access requirements may include system configuration information, system level RF bus resources, application level RF bus resources, RF bus capabilities of requestor, RF bus capabilities of target, amount of information to be conveyed, priority level of requestor, priority level of the information to be conveyed, real-time or non-real-time aspect of the information to be conveyed, and/or information conveyance integrity requirements.

The system configuration information includes number of devices, number of nulling and reinforcing patterns, number and type of RF data bus, number and type of RF instruction bus, number and type of RF control bus, etc. Note that the information conveyance integrity requirements include level of rate encoding (e.g., ½ rate, ¾ rate, etc.), level of interleaving, level of error correction, and/or level of acknowledgement (e.g., whether an ACK back is required or not, if required content of the ACK). Further note that the system level RF bus resources and the application level RF bus resources includes a Single Input Single Output (SISO) channel, a Multiple Input Multiple Output (MIMO) channel, multiple SISO channels, multiple MIMO channels, null-reinforce multipath patterning, frequency band selection, waveguide RF path, dielectric RF path, free space RF path, time division multiple access (TDMA) time slot, frequency division multiple access (FDMA) frequency slot, code division multiple access (CDMA) code slot, proprietary resource, and carrier sense multiple access (CSMA).

The method then proceeds to step 820 where the RF bus controller determines RF bus resource available. This step may further include determining an RF bus protocol based on the access request, wherein the RF bus protocol is one of: a standardized wireless protocol, a proprietary wireless protocol, and a modified standardized wireless protocol.

The method then proceeds to step 822 where the RF bus controller allocates, via the interface, RF bus resources in accordance with the access requirements and the RF bus resource availability. This may be done by determining whether sufficient RF bus resources are available to fulfill the access requirements; when the sufficient RF bus resources are available to fulfill the access request, allocating the sufficient RF bus resources to a requestor; when the sufficient RF bus resources are not available to fulfill the access request, determining available RF bus resources; determining whether the access requirements can be accommodated by the available RF bus resources; when the access request can be accommodated by the available RF bus resources, allocating the available RF bus resources to the requestor; and when the access request cannot be accommodated by the available RF bus resources, queuing the access requirements.

The method may further include, when the sufficient RF bus resources are not available to fulfill the access requirements, the RF bus controller determining whether priority of the requestor is at or above a first priority level; when priority of the requestor is at or above the first priority level, determining whether allocated RF bus resources can be reallocated to make available the sufficient RF bus resources; when the allocated RF bus resources can be reallocated, reallocating at least some of the allocated RF bus resources; when the RF bus resources cannot be reallocated, determining whether the priority of the requestor is of a second priority level; when the priority level of the requestor is of the second priority level, reclaiming RF bus resources from the allocated RF bus resources to provide the sufficient RF bus resources; and when the priority level of the requestor is below the second priority level, queuing the access requirements.

Figure 16 is a schematic block diagram of an embodiment of an RF bus transceiver 840 that may be used as or in combination with RF bus transceiver 108 or 110. The RF bus transceiver 840 includes a transmitter 842 and a receiver 844. The transmitter 842 performs the methods of Figure 17 and the receiver 844 performs the method of Figure 18.

Figure 17 is a logic diagram of method for RF bus transmitting that begins at step 846 where the transmitter 842 determine whether outbound information is to be transmitted via the RF bus. Such a determination may be made by setting a flag by the device that includes the RF bus transceiver, by providing the outbound information to the RF bus transceiver, and/or any other mechanism for notifying that it has information to transmit.

When the outbound information is to be transmitted via the RF bus, the method proceeds to step 848 where the transmitter 842 determines whether the RF bus is available. When the RF bus is not available, the transmitter 842 waits until the RF bus becomes available. The transmitter 842 may determine by the availability of the RF bus by utilizing a carrier sense multiple access with collision avoidance (CSMA/CD) access protocol, utilizing a request to send frame and clear to send frame exchange access protocol, utilizing a poll-response access protocol, interpreting a control time slot of a time division multiple access (TDMA) frame, interpreting a control frequency slot of a frequency division multiple access (FDMA) frame, interpreting a control code slot of a code division multiple access (CDMA) frame, and/or utilizing a request-grant access protocol.

When the RF bus is available, the method proceeds to step 850 where the transmitter 842 secures access to the RF bus. The transmitter 842 may secure access to the RF bus by accessing the RF bus in accordance with a carrier sense multiple access with collision avoidance (CSMA/CD) access protocol, accessing the RF bus in response to a favorable request to send frame and clear to send frame exchange, accessing the RF bus in accordance with a poll-response access protocol, accessing the RF bus via an allocated time slot of a time division multiple access (TDMA) frame, accessing the RF bus via an allocated frequency slot of a frequency division multiple access (FDMA) frame, accessing the RF bus via an allocated code slot of a code division multiple access (CDMA) frame, and/or accessing the RF bus in accordance with a request-grant access protocol. Note that the transmitter 842 may determine whether the RF bus is available and secures access to the RF bus by communicating with the RF bus controller 88 via a wireline link, via a wireless link, and/or via the RF bus.

The method proceeds to step 852 where the transmitter 842 converts the outbound information into outbound RF bus signal. The method then proceeds to step 844 where the transmitter 842 transmits the outbound RF bus signal via the RF bus when access to the RF bus is secured. As such, the transmitter 842 prepares data for transmission via one of the RF buses in a device and transmits the RF bus signal when it is the transmitter's turn and/or when the RF bus is not in use.

Figure 18 is a logic diagram of method for RF bus receiving that begins at step 856 where the receiver 844 determines whether inbound information is to be received via the RF bus. The receiver 844 may determine that there is inbound information to be received by utilizing a carrier sense multiple access with collision avoidance (CSMA/CD) access protocol, utilizing a request to send frame and clear to send frame exchange access protocol, utilizing a poll-response access protocol, interpreting a control time slot of a time division multiple access (TDMA) frame, interpreting a control frequency slot of a frequency division multiple access (FDMA) frame, interpreting a control code slot of a code division multiple access (CDMA) frame, and/or utilizing a request-grant access protocol.

When there is inbound information to be received via the RF bus, the method proceeds to step 858 where the receiver 844 determines access parameters to the RF bus for receiving the inbound information. The receiver 844 may determine the access parameters by receiving the inbound RF bus signal in accordance with a carrier sense multiple access with collision avoidance (CSMA/CD) access protocol, receiving the inbound RF bus signal in accordance with a request to send frame and clear to send frame exchange, receiving the inbound RF bus signal in accordance with a poll-response access protocol, receiving the inbound RF bus signal via an allocated time slot of a time division multiple access (TDMA) frame, receiving the inbound RF bus signal via an allocated frequency slot of a frequency division multiple access (FDMA) frame, receiving the inbound RF bus signal via an allocated code slot of a code division multiple access (CDMA) frame, and/or receiving the inbound RF bus signal in accordance with a request-grant access protocol. Note that the receiver 844 may determine the access parameters by communicating with the RF bus controller 88 via a wireline link, a wireless link, and/or the RF bus.

The method then proceeds to step 860 where the receiver 844 receives an inbound RF bus signal during the access to the RF bus in accordance with the access parameters. The method then proceeds to step 862 where the receiver 844 converts the inbound RF bus signal into the inbound information.

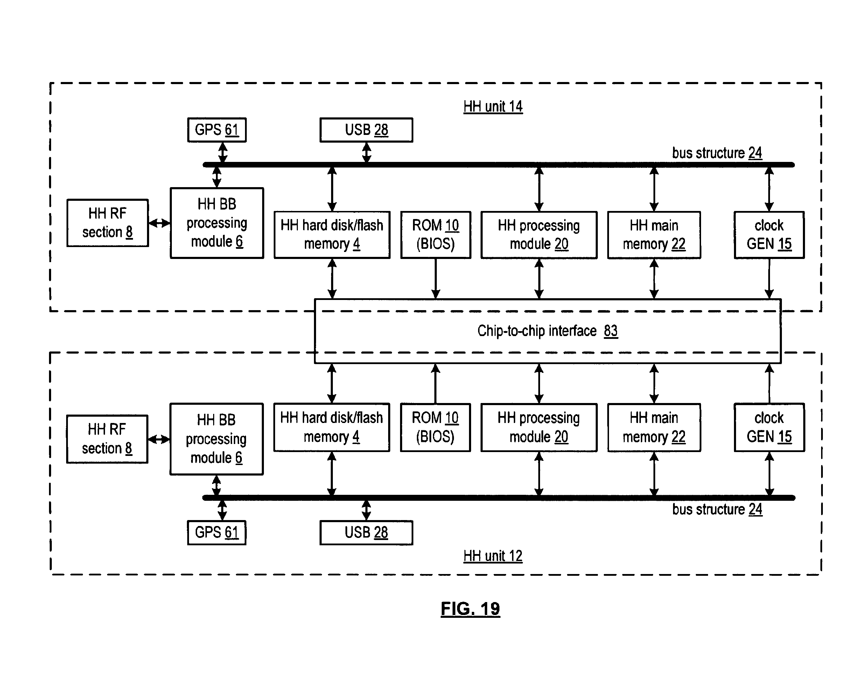

Figure 19 is a schematic block diagram of another embodiment of a handheld unit that is coupled to other handheld units in accordance with the present invention. In particular, this embodiment is similar to the embodiment presented in conjunction with FIG. 3 and includes similar elements that are referred to by common reference numerals. In this embodiment however, instead of handheld computing units 12 and 14 being coupled via wireless connections 18 implemented by a general RF bus that communicates between two or more devices, chip-to-chip communications are used to more directly communicate between the integrated circuits used to implement the processing resources of handheld computing units 12 and 14. In particular handheld hard disk/flash memory 4, ROM BIOS 10, handheld processing module 20, handheld main memory 22 and clock generator 15 of handheld computing unit 12 are implemented via a plurality of integrated circuits, such as one integrated circuit for each module or other combination of multiple integrated circuits. Each of these modules communicates directly with the corresponding module of handheld computing unit 14 via wireless connections implemented by chip-to-chip interface 83. While two devices, handheld computing units 12 and 14 are shown to communicate in this fashion, three or more devices could likewise be coupled.

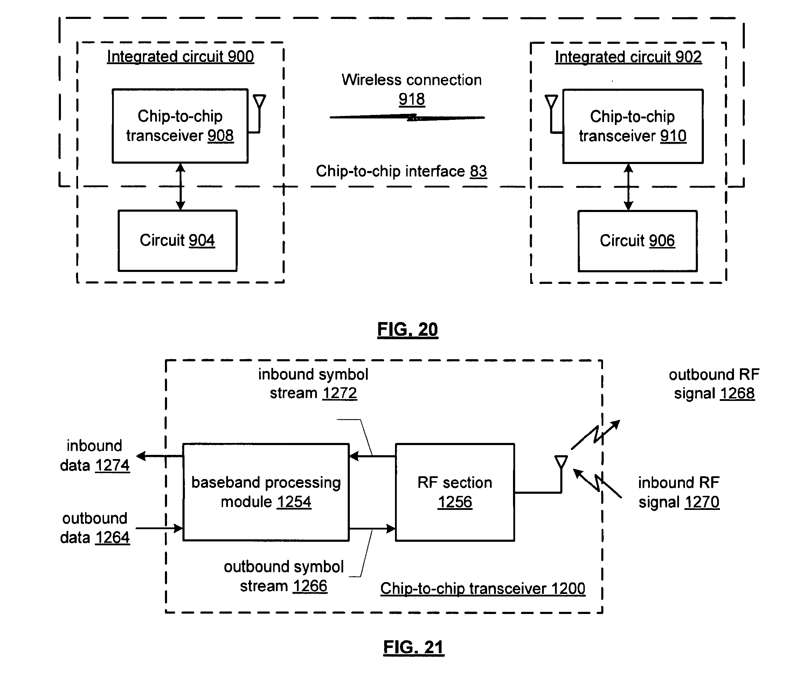

Figure 20 is a schematic block diagram of an embodiment of a chip-to-chip interface in accordance with the present invention. In particular, chip-to-chip interface 83 is shown that facilitates the wireless connections 918 between chip-to-chip transceivers 908 and 910 of integrated circuits 900 and 902 of handheld computing units 12 and 14. In this embodiment, chip-to-chip transceivers 908 and 910 include corresponding radio frequency transceivers to support wireless connection 918 therebetween. The wireless connections 918 may be RF data communications, RF instruction communications, RF control signal communications, and/or RF input/output communications. For example, data, control, operational instructions, and/or input/output signals (e.g., analog input signals, analog output signals, digital input signals, digital output signals) that are traditionally conveyed between modules of a single device are, transmitted via the wireless connections 918. In an embodiment of the present invention, the wireless connections 918 can be implemented via signaling in a millimeter wave frequency band, such as a 60 GHz band or otherwise in the V-band, or via another millimeter wave frequency band in the range of 30 - 300 GHz. In particular, integrated circuits 900 and 902 can be memory devices, processing devices or other integrated circuits that implement one or more processing resource that can be used in the execution of an application by its host device and can be configured for direct chip to chip communications with processing resources of another device.

The wireless connections 918 may also include operating system level communications and application level communications. The operating system level communications are communications that correspond to resource management of the handheld computing units 12, 14 and 16, loading and executing applications (e.g., a program or algorithm), multitasking of applications, protection between applications, device start-up, interfacing with a users, etc. The application level communications are communications that correspond to the data conveyed, operational instructions conveyed, and/or control signals conveyed during execution of an application.

While not shown, an RF bus controller 88 can be included to control the wireless connections 918 between the chip-to-chip transceivers 908 and 910 in an RF bus configuration similar to any of the RF bus configurations previously described.

Figure 21 is a schematic block diagram of an embodiment of a chip-to-chip transceiver device in accordance with the present invention. In particular a chip-to-chip transceiver is shown that can be used to implement chip-to-chip transceivers 908 and 910.

The baseband processing module 1254 is coupled to convert outbound data 1264 into an outbound symbol stream 1 266. This may be done in accordance with one or more wireless communication protocols including, but not limited to, IEEE 802.11, Bluetooth, GSM, RFID, CDMA, Enhanced Data rates for GSM Evolution (EDGE), General Packet Radio Service (GPRS), new and/or current versions thereof, modifications thereof, extensions thereof, combinations thereof, new WLAN standards, new cellular voice and/or data standards, and/or new wireless personal area networks (WPAN) and/or other communication protocol.

The RF section 1256 converts the outbound symbol stream 1266 into an outbound RF signal 1268. In an embodiment, the RF section 1256 includes a digital to analog conversion module, an up-conversion module, and a power amplifier module. The digital to analog conversion module converts the outbound symbol stream 1266 into an analog symbol stream. The up-conversion module, which may be a direct conversion module or a superheterodyne module, mixes the analog symbol stream with a local oscillation to produce an up-converted signal. The power amplifier module amplifies the up-converted signal to produce the outbound RF signal 1268. In another embodiment, the up-conversion module modulates phase of the local oscillation based on phase information of the analog symbol stream to produce the up-converted signal. The power amplifier module amplifies the up-converted signal based on a constant amplifier factor or based on amplitude modulation information of the analog symbol stream to produce the outbound RF signal 1268.

The RF section 1256 is also coupled to and to convert an inbound RF signal 1270 into an inbound symbol stream 1272. In one embodiment, the RF section 1256 includes a low noise amplifier module, a down-conversion module, and an analog to digital conversion module. The low noise amplifier module amplifies the inbound RF signal 1270 to produce an amplified inbound RF signal. The down conversion module, which may a direction conversion module or a superheterodyne module, mixes the amplified inbound RF signal with a local oscillation to produce an analog inbound symbol stream. The analog to digital conversion module converts the analog inbound symbol stream into the inbound symbol stream 1272.

The baseband processing module 1254 is also coupled to convert the inbound symbol stream 1272 into inbound data 1274. This may be done in accordance with one or more wireless communication protocols including, but not limited to, IEEE 802.11, Bluetooth, GSM, RFID, CDMA, Enhanced Data rates for GSM Evolution (EDGE), General Packet Radio Service (GPRS), new and/or current versions thereof, modifications thereof, extensions thereof, combinations thereof, new WLAN standards, new cellular voice and/or data standards, and/or new wireless personal area networks (WPAN) and/or other communication protocol.

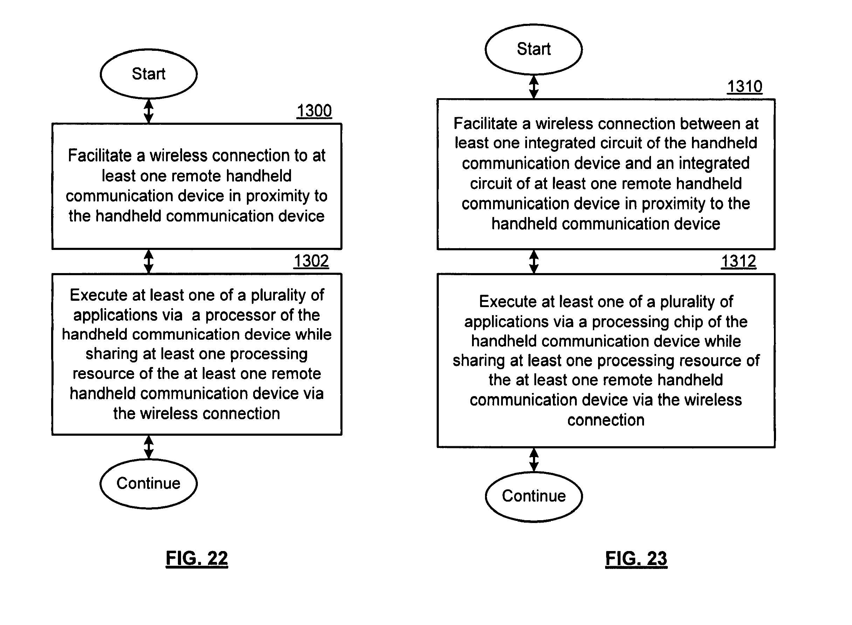

Figure 22 is a flowchart representation of an embodiment of a method in accordance with the present invention. In particular, a method is shown for use in conjunction with any of the functions and features described in conjunction with FIGs. 1-21. In step 1300, a wireless connection is facilitated to at least one remote handheld communication device in proximity to a handheld communication device. In step 1302, at least one of a plurality of applications is executed via a processor of the handheld communication device while sharing at least one processing resource of the at least one remote handheld communication device via the wireless connection.

Figure 23 is a flowchart representation of an embodiment of a method in accordance with the present invention. In particular, a method is shown for use in conjunction with any of the functions and features described in conjunction with FIGs. 1-22. In step 1310, a wireless connection is facilitated between at least one integrated circuit of a handheld communication device and an integrated circuit of at least one remote handheld communication device in proximity to the handheld communication device. In step 1312, at least one of the plurality of applications is executed via a processing chip of the handheld communication device while sharing at least one processing resource of the at least one remote handheld communication device via the wireless connection. The at least one integrated circuit can include a memory chip, and/or a processing chip of the at least one remote handheld communication device.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

## Claims

1. A handheld communication device comprises:
a wireless telephony transceiver that communicates with a telecommunication network;
a memory module or memory chip;
a processing module or processing chip, coupled to the memory module or memory chip, and/or the wireless transceiver, that executes a plurality of applications including a telecommunication application; and
a device for facilitating a wireless connection to at least one remote handheld communication device in proximity to the handheld communication device;
wherein the processing module or the processing chip executes at least one of the plurality of applications while sharing at least one processing resource of the at least one remote handheld communication device via the wireless connection.

2. The handheld communication device of claim 1 wherein the device for facilitating the wireless connection is an RF bus interface.

3. The handheld communication device of claim 1 wherein the device for facilitating the wireless connection is a chip-to-chip interface.

4. The handheld communication device of claim 3 wherein the chip-to-chip interface is adapted to facilitate the wireless connection between at least one integrated circuit of the handheld communication device and an integrated circuit of the at least one remote handheld communication device, the at least one integrated circuit of the handheld communication device including the memory chip and/or the processing chip.

5. The handheld communication device of claim 2 wherein at least one remote handheld communication device includes a plurality of remote handheld communication devices.

6. The handheld communication device of claim 2 wherein the at least one processing resource includes a memory of the at least one remote handheld communication device.

7. The handheld communication device of claim 2 wherein the at least one processing resource includes a processor of the at least one remote handheld communication device.

8. The handheld communication device of claim 2 wherein the RF bus interface includes a millimeter wave transceiver for facilitating the wireless connection in a millimeter wave frequency band.

9. The handheld communication device of claim 2 further comprising:
a user interface, coupled to the RF bus interface, for receiving a sharing indication from a user;
wherein the RF bus interface is selectively enabled and disabled based on the sharing indication.

10. The handheld communication device of claim 2 wherein the processing module executes an application of the at least one remote handheld communication device while sharing the at least one processing resource of the at least one remote handheld communication device via the wireless connection.

11. The handheld communication device of claim 10 further comprising:
a user interface, coupled to the RF bus interface, for receiving a sharing limit from a user;
wherein the processing module limits an amount of computation resources expended by the processing module to execute the application of the at least one remote handheld communication device, based on the sharing limit.

12. The handheld communication device of claim 2 wherein the memory module shares a memory resource with the at least one remote handheld communication device via the wireless connection in conjunction with an application executed by the at least one remote handheld communication device.

13. The handheld communication device of claim 12 further comprising:
a user interface, coupled to the RF bus interface, for receiving a sharing limit from a user;
wherein the memory module limits an amount of the memory resource shared with the at least one remote handheld communication device, based on the sharing limit.

14. The handheld communication device of claim 2 wherein the handheld communication device operates in a master mode, and the at least one remote communication device operates in a slave mode.

15. A method for use with a handheld communication device, the method comprising:
facilitating a wireless connection to at least one remote handheld communication device in proximity to the handheld communication device;
executing at least one of a plurality of applications via a processor or processing chip of the handheld communication device while sharing at least one processing resource of the at least one remote handheld communication device via the wireless connection.
